(19) 

**Europäisches Patentamt**
**European Patent Office**
**Office européen des brevets**

(11) **EP 2 172 295 B1**

(12) **EUROPÄISCHE PATENTSCHRIFT**

(45) Veröffentlichungstag und Bekanntmachung des Hinweises auf die Patenterteilung:
**20.06.2012 Patentblatt 2012/25**

(51) Int Cl.:
***B23H 7/08*** *(2006.01)*

(21) Anmeldenummer: **08165663.9**

(22) Anmeldetag: **01.10.2008**

(54) **Drahtelektrode zum funkenerosiven Schneiden**

Wire electrodes for electrical discharge cutting

Fil électrode destiné à la coupe par étincelage

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**07.04.2010 Patentblatt 2010/14**

(73) Patentinhaber: **Berkenhoff GmbH**
**35452 Heuchelheim (DE)**

(72) Erfinder: **Nöthe, Tobias**
**35745 Herborn (DE)**

(74) Vertreter: **UEXKÜLL & STOLBERG**
**Patentanwälte**
**Beselerstrasse 4**
**22607 Hamburg (DE)**

(56) Entgegenhaltungen:
**EP-A- 0 734 805     EP-A- 0 955 396**
**US-A- 4 968 867**

EP 2 172 295 B1

**Beschreibung**

Die vorliegende Erfindung betrifft eine Drahtelektrode zum funkenerosiven Schneiden mit einem Kern aus Aluminium oder einer Aluminiumlegierung und einer den Kern umgebenden Mantelschicht, die Kupfer, Zink und/oder eine Kupfer-Zink-Legierung aufweist.

Eine derartige Drahtelektrode wird in Dokument EP0734805 offenbart.

Funkenerosionsverfahren (electrical discharge machining, EDM) werden zum Trennen elektrisch leitender Werkstücke eingesetzt und beruhen auf der Abtragung von Werkstoff mit Hilfe von Funkenentladungen zwischen dem Werkstück und einem Werkzeug. Zu diesem Zweck werden zwischen dem betreffenden Werkstück und dem in einem geringen Abstand dazu angeordneten und als Elektrode fungierenden Werkzeug in einer dielektrischen Flüssigkeit, wie zum Beispiel deionisiertem Wasser oder einem Öl, durch das Anlegen von Spannungsimpulsen kontrollierte Funkenentladungen herbeigeführt. Auf diese Weise können Werkstücke im wesentlichen unabhängig von ihrer Härte bearbeitet werden.

Ein spezielles Funkenerosionsverfahren, bei dem das Werkzeug durch einen gespannten, dünnen Draht mit typischen Durchmessern in einem Bereich von etwa 0,02 bis 0,4 mm gebildet wird, ist das funkenerosive Schneiden oder Drahterodieren. Da der Draht während des Erodierprozesses durch Materialabtragung verschleißt, muss er ständig durch die Schneid- bzw. Bearbeitungszone gezogen werden und kann nur einmal verwendet werden, d.h. der Draht wird kontinuierlich verbraucht.

In der Praxis werden je nach Anwendungsfall beschichtete oder unbeschichtete Drahtelektroden eingesetzt. Unbeschichtete Drahtelektroden, die auch als Blankdrähte bezeichnet werden, bestehen aus einem homogenen Material, während beschichtete Drahtelektroden einen ummantelten bzw. beschichteten Kern aufweisen. Beschichtete Drahtelektroden sind im Stand der Technik in aller Regel so konstruiert, dass der Kern der Drahtelektrode die für den Drahtdurchlauf und die Drahtvorspannung erforderliche Zugfestigkeit und die notwendige elektrische und thermische Leitfähigkeit verleiht und eine den Kern umgebende Mantelschicht für den eigentlichen Erosionsprozess verantwortlich ist.

Im Bereich geringer Drahtdurchmesser von 0,02 bis 0,07 mm haben sich beschichtete Drahtelektroden mit einem Kernmaterial sehr hoher Zugfestigkeit, wie zum Beispiel Wolfram, Molybdän oder Stahl, etabliert, da nur auf diese Weise eine für einen stabilen Erodierprozess und für die geforderte Präzision notwendige Drahtvorspannung verwirklicht werden kann. Für größere Drahtdurchmesser stellen Drähte mit Kernen aus Wolfram oder Molybdän allerdings keine wirtschaftliche Lösung dar.

Der überwiegende Teil der in der Praxis eingesetzten Drähte weist Durchmesser auf, die im Bereich von 0,1 bis 0,3 mm liegen, da hierdurch in der Regel die konstruktiven Vorgaben bezüglich der Geometrie des zu erzeugenden Bauteils erfüllt werden können. In diesem Standard-Durchmesserbereich haben sich blanke und beschichtete Drähte auf Messingbasis durchgesetzt. Die entsprechenden Blankdrähte bestehen typischerweise aus Messing mit einem Zinkanteil zwischen 35 und 40 Gew.%, während die meisten beschichteten Drähte einen Kern aus Kupfer oder Messing und eine oder mehrere Mantelschichten aus Zink oder einer Kupfer-Zink-Legierung aufweisen. Es hat sich gezeigt, dass derartige Drähte mit einer ausreichenden Zugfestigkeit und Verschleißbeständigkeit hergestellt werden können, um die üblicherweise gestellten Anforderungen an die Bauteilpräzision zu erfüllen. Ihre Zugfestigkeit bei Raumtemperatur liegt üblicherweise im Bereich von ca. 350 bis 1100 N/mm$^2$. Darüber hinaus weisen diese Drähte eine ausreichend hohe elektrische Leitfähigkeit auf, um eine effiziente Energieübertragung vom Impulsgenerator der Erodiermaschine zum Werkstück zu gewährleisten. Als Kernwerkstoff haben Kupfer oder Messing ferner den Vorteil einer wirtschaftlichen Verarbeitbarkeit durch Kaltumformung, und als am eigentlichen Erodierprozess beteiligte Materialien bieten Zink und Messing aufgrund der Anwesenheit von Zink und der durch diese bewirkten leichten Verdampfbarkeit die Vorteile einer relativ hohen Abtragleistung und Effizienz des Erodierprozesses und der Möglichkeit der Übertragung sehr kleiner Impulsenergien zum Feinschlichten von Werkstückoberflächen.

Vor diesem Hintergrund wurden in der Vergangenheit - maßgeblich getrieben von Neuerungen in der Maschinentechnik und insbesondere der Steigerung der Leistungsfähigkeit der Prozessenergiequellen - eine Vielzahl von blanken und beschichteten Drähten entwickelt, die auf die Erhöhung der Abtragleistung und/oder auf die Verbesserung der Werkstückqualität abzielten. So bestand ein Ziel dieser Entwicklungen darin, eine hohe Zugfestigkeit mit einer hohen elektrischen und thermischen Leitfähigkeit zu kombinieren. Im Zuge dessen sind im oben genannten Standard-Durchmesserbereich vereinzelt auch beschichtete Drahtelektroden vorgeschlagen worden, die Kerne aus anderen Materialien als Kupfer oder Messing aufweisen. Beispielsweise ist in der US 4,968,867 eine Drahtelektrode beschrieben, deren Kernmaterial eine hohe thermische Leitfähigkeit aufweisen soll und unter anderem Aluminium oder eine Aluminiumlegierung sein kann. Zur Erzielung der gewünschten Zugfestigkeit und mechanischen Belastbarkeit ist eine aus Messing ausgebildete Mantelschicht mit einer bestimmten Mindestdicke vorgesehen. Danach muss im Querschnitt der Flächenanteil der Mantelschicht größer als der Flächenanteil des Kerns sein und 50 bis 90% der gesamten Querschnittsfläche der Drahtelektrode betragen. Durch diesen Aufbau soll ferner eine gute Schwingungsdämpfung der Drahtelektrode erreicht werden.

Da die seit knapp 40 Jahren eingesetzte Technik des Drahterodierens mittlerweile einen hohen technologischen Reifegrad erlangt hat, gewinnt neben den zuvor genannten Zielen auch die Wirtschaftlichkeit des Verfahrens zunehmend an Bedeutung, um die Drahterodiertechnik für einen möglichst breiten Anwenderkreis attraktiv zu gestalten.

Es ist Aufgabe der vorliegenden Erfindung, die Drahtelektroden des Standes der Technik mit ihren hohen Abtragsleistungen und den daraus resultierenden kurzen Bearbeitungszeiten so weiterzuentwickeln, dass die Wirtschaftlichkeit des Drahterodierens weiter erhöht wird, während eine ausreichende Zugfestigkeit sowie gute Erodiereigenschaften beibehalten werden.

Zur Lösung dieser Aufgabe dienen die Merkmale von Patentanspruch 1. Vorteilhafte Ausführungsformen der Drahtelektrode sind Gegenstand der jeweiligen zugehörigen Unteransprüche.

Nach der vorliegenden Erfindung ist vorgesehen, dass eine Drahtelektrode zum funkenerosiven Schneiden einen Kern aufweist, der zu mehr als 50 Gew. % aus kristallinem Reinaluminium und/oder einer oder mehreren kristallinen Aluminiumlegierungen besteht. Unter einem "kristallinen" Material werden im Rahmen dieser Anmeldung in üblicher Weise sowohl einkristalline Materialien als auch polykristalline Materialien verstanden. So könnte der Kern neben kristallinem Reinaluminium und/oder einer oder mehreren kristallinen Aluminiumlegierungen beispielsweise einen oder mehrere Zusatzstoffe aufweisen, um bestimmte Eigenschaften günstig zu beeinflussen. Es ist jedoch bevorzugt, dass der Kern vollständig oder im wesentlichen vollständig aus kristallinem Reinaluminium und/oder einer oder mehreren kristallinen Aluminiumlegierungen besteht, d.h. dass ein Kern aus kristallinem Reinaluminium und/oder einer oder mehreren kristallinen Aluminiumlegierungen vorgesehen ist. Insbesondere kann der Kern insgesamt aus Aluminium oder aus einer Aluminiumlegierung ausgebildet sein. Der Kern kann homogen ausgebildet sein oder, zum Beispiel in Form mehrerer übereinander angeordneter Aluminium- bzw. Aluminiumlegierungs-Einzelschichten unterschiedlicher Zusammensetzung, in radialer Richtung variierende Eigenschaften aufweisen.

Den Kern umgebend ist eine Mantelschicht vorgesehen, die Kupfer, Zink und/oder eine Kupfer-Zink-Legierung aufweist. Demnach kann die Mantelschicht beispielsweise vollständig bzw. im wesentlichen vollständig aus Kupfer bestehen, vollständig bzw. im wesentlichen vollständig aus Zink bestehen oder vollständig bzw. im wesentlichen vollständig aus einer Kupfer-Zink-Legierung bestehen. Wie später noch ausgeführt wird, ist es auch möglich, dass die Mantelschicht aus mehreren Einzel- bzw. Teilschichten besteht, die jeweils aus den genannten Stoffen aufgebaut sind. Bevorzugt ist die Mantelschicht zu mindestens 50 Gew.% aus Kupfer, Zink und/oder einer Kupfer-Zink-Legierung ausgebildet. Eine Möglichkeit wäre eine homogene Mantelschicht, die ca. 50 Gew.% Kupfer und ca. 50 Gew.% Zink aufweist oder die ca. 50 Gew.% einer Kupfer-Zink-Legierung aufweist. Ein bevorzugtes Material für die Mantelschicht ist Messing bzw. eine Kupfer-Zink-Legierung mit einem Zinkanteil von mehr als 40 Gew.%. Ein derartiges Messing umfasst β-Phase, die zwar spröde ist, eine relativ geringe Zugfestigkeit aufweist und sich schlecht kalt umformen lässt, aber in vorteilhafter Weise die Schneidleistung erhöht. Daher ist es besonders bevorzugt, wenn ein solches Messing zumindest im Außenbereich der Mantelschicht vorgesehen ist.

Die Mantelschicht kann zum Beispiel durch geeignete Beschichtungsverfahren auf den Kern aufgebracht werden, ggf. in Kombination mit einem Wärmebehandlungsverfahren. Das Aufbringen der Mantelschicht kann beispielsweise physikalisch oder elektrochemisch erfolgen, und es können sich ggf. noch Schritte zur Verringerung des Drahtdurchmessers anschließen. Außerdem ist es möglich, zunächst einen Draht auszubilden, der den Aufbau des Kerns aufweist, diesen Draht in einem röhrenförmig geformten Stück aus einem Material anzuordnen, das zumindest einzelne Elemente der beabsichtigten Mantelschicht aufweist, und anschließend mit Hilfe einer Drahtzieheinrichtung den Durchmesser dieser Kombination zu verringern und dabei das röhrenförmige Materialstück auf das Kernstück zu plattieren. Das röhrenförmige Materialstück kann beispielsweise aus Kupfer bestehen, und im Anschluss an die Durchmesserverringerung kann, z.B. elektrochemisch, zunächst eine Zinkschicht aufgebracht und schließlich eine Wärmebehandlung durchgeführt werden, durch die mittels Diffusion eine Messing aufweisende Mantelschicht gebildet wird.

Bevorzugt bildet die Mantelschicht die Außenfläche der Drahtelektrode, und zwischen dem Kern und der Mantelschicht sind - mit Ausnahme einer weiter unten noch genauer angesprochenen, ggf. vorhandenen Übergangsschicht - keine weiteren Schichten vorgesehen. In bestimmten Anwendungsfällen kann es jedoch auch vorteilhaft sein, auf der Mantelschicht und/oder zwischen Kern und Mantelschicht eine oder mehrere weitere Schichten vorzusehen.

Die den Kern umgebende Mantelschicht kann - je nach Anwendungsfall - sowohl geschlossen ausgebildet sein als auch Risse oder Unterbrechungen aufweisen, d.h. die Mantelschicht kann den Kern vollständig oder im wesentlichen vollständig oder aber nur teilweise bedecken.

Entlang der gesamten Länge der Drahtelektrode beträgt im Querschnitt senkrecht zur Erstreckungsrichtung des Drahtes der Flächenanteil des Kerns an der gesamten Querschnittsfläche mindestens 60%, bevorzugt mindestens 65%, mehr bevorzugt mindestens 70% und am meisten bevorzugt mindestens 75% und bevorzugt maximal 95%. In bestimmten Anwendungsfällen kann es aber auch von Vorteil sein, wenn dieser Flächenanteil maximal 90% oder maximal 85% beträgt. Es ist bevorzugt, dass die Drahtelektrode einen kreisförmigen Querschnitt aufweist. Für bestimmte Anwendungen können aber auch von der Kreisform abweichende Querschnittsformen potentiell Vorteile aufweisen, wie zum Beispiel Rechteckprofile.

Es hat sich herausgestellt, dass mit einer Drahtelektrode von dieser Ausgestaltung gegenüber vorbekannten Drähten die Wirtschaftlichkeit des Verfahrens durch Verringerung des spezifischen Gewichts der Drahtelektrode und somit des gewichtsbezogenen Drahtverbrauchs pro Zeiteinheit erheblich erhöht wird. So beträgt die Dichte beispielsweise bei einem Aluminiumkern mit einem Flächenanteil von 60% und einer Mantelschicht aus Messing mit 37 Gew.% Zink (CuZn$_{37}$) ca. 5000 kg/m$^3$ und liegt damit um circa 40% unter dem Wert für einen Blankdraht aus Messing dieser Zusammensetzung.

Überraschenderweise lassen sich dennoch ausreichende Zugfestigkeiten von bevorzugt mindestens 350 N/mm$^2$ bei Raumtemperatur und thermische und elektrische Leitfähigkeiten (z.B. elektrische Leitfähigkeiten von mehr als 15 m/$\Omega$mm$^2$) realisieren, um einen effizienten, schnellen und ausreichend präzisen Erodierprozess zu ermöglichen. So besteht ein wesentlicher Nachteil der Wahl von Materialien mit einem geringeren spezifischen Gewicht allgemein darin, dass die Aufheizung der Drahtelektrode bei gleichbleibender Wärmezufuhr und gleichem Drahtdurchmesser zunimmt und der Draht dadurch an Zugfestigkeit verliert, so dass sich das Risiko eines Drahtrisses erhöht. Unterhalb des Schmelzpunkts lässt sich die aus einer in einen kleinen Drahtabschnitt $\Delta l_D$ eingetragenen Wärmemenge resultierende Temperaturänderung in diesem Abschnitt durch die folgende Formel angeben:

$$\Delta T_D = \frac{Q'_{w,zu}}{\rho_D \cdot A_D \cdot v_D \cdot c_{p,D}} - Q'_{w,ab} \, ,$$

wobei $\Delta T_D$ die erzeugte Temperaturdifferenz im Drahtabschnitt $\Delta l_D$, $Q'_{w,zu}$ der dem Drahtabschnitt $\Delta l_D$ durch Widerstandserwärmung und Entladungswärme zugeführte Wärmestrom, $\rho_D$ die Dichte der Drahtelektrode, $A_D$ die Querschnittsfläche der Drahtelektrode, $v_D$ die Drahtablaufgeschwindigkeit, $c_{P,D}$ die spezifische Wärmekapazität der Drahtelektrode und $Q'_{w,ab}$ der durch das Dielektrikum, die Drahtabschnitte außerhalb des Erosionsbereichs, die Drahtführungen und die Stromzuführungen an die Umgebung abgeführte Wärmestrom ist. Daraus lässt sich ablesen, dass die Temperaturerhöhung zum einen durch die Dichte $\rho_D$ und die spezifische Wärmekapazität $c_{P,D}$ beeinflusst wird. Da der abgeführte Wärmestrom $Q'_{w,ab}$ mit steigender Wärmeleitfähigkeit des Drahtes und der zugeführte Wärmestrom $Q'_{w,zu}$ mit steigendem elektrischen Widerstand des Drahtes zunimmt, wird die Temperaturerhöhung zum anderen von diesen beiden Drahtkenngrößen bestimmt. Die vorliegende Erfindung beruht auf der Erkenntnis, dass unter den leichten Materialien gerade kristallines Aluminium den thermophysikalischen Nachteil der geringen Dichte durch eine hohe spezifische Wärmekapazität und eine hohe thermische und elektrische Leitfähigkeit kompensieren kann. Dieser Vorteil überträgt sich auf kristalline Aluminiumlegierungen.

Da die Abtragleistung und Prozessstabilität von Aluminium oder Aluminiumlegierungen als unmittelbar am Erosionsprozess beteiligte Materialien unbefriedigend sind, hat die Mantelschicht die Funktion, der erfindungsgemäßen Drahtelektrode gute Erodiereigenschaften im Sinne einer hohen Prozessstabilität und Schneidleistung zu verleihen. Da diese Eigenschaften durch das leicht verdampfbare Zink in reiner Form oder gebunden in einer Legierungen günstig beeinflusst werden, ist es bevorzugt, dass die Mantelschicht Zink oder eine Kupfer-Zink-Legierung aufweist oder die Mantelschicht oder eine, bevorzugt äußere, Teilschicht von ihr aus Zink oder aus einer Kupfer-Zink-Legierung ausgebildet ist oder zu mindestens 50 Gew.% aufweist. Es sei erwähnt, dass sich die Wirtschaftlichkeit durch Verringerung des Drahtverbrauchs nicht auf einfache Weise mit Hilfe einer beliebigen Verringerung der Drahtablaufgeschwindigkeit erhöhun lässt, da der Drahtablauf zur Verschleißkompensation dient und eine Geschwindigkeitsreduzierung somit das Risiko des Drahtbruchs erhöht und die Werkstückpräzision mindert. Außerdem ist es auch nicht möglich, den Drahtdurchmesser wesentlich zu verringern, da gleichzeitig aufgrund der quadratischen Abnahme der Querschnittsfläche die übertragbare Impulsenergie und somit die Abtragleistung drastisch reduziert würde. Zudem kämen aufgrund der Anforderung an die Zugfestigkeit nur teure und schwere Metalle wie Molybdän oder Wolfram in Frage.

Ein weiterer Vorteil der erfindungsgemäßen Drahtelektrode besteht darin, dass sich gegenüber vorbekannten Drähten bei gleicher Drahtlänge das Gewicht der Spule verringert, auf die der Draht aufgewickelt ist. Dadurch wird nicht nur die Handhabung beim Transport und beim Einsetzen der Spule in die Drahterodiermaschine vereinfacht, sondern es werden auch geringere Anforderungen an die Dimensionierung der die Spulen während des Betriebs tragenden Wellen und der die Spulendrehung stoppenden Bremsen gestellt, so dass die Drahterodiermaschinen kostengünstiger hergestellt werden können. Ferner kann die Genauigkeit erhöht werden, da eine leichtere Spule bei Schwankungen im nachgelagerten Drahtablauf ein geringeres Rückzugmoment bzw. einen verringerten Nachlauf zeigt und somit Drahtschwingungen gemindert werden oder auch Drahtrisse vermieden werden. Alternativ können bei gleich bleibendem Spulengewicht größere Spulen mit einer größeren Drahtlänge realisiert werden, so dass bei identischer Maschinenauslegung die Zeiten zwischen den kosten- und zeitintensiven Spulenwechseln erhöht werden können.

Neben Ausgestaltungen mit einer homogenen Mantelschicht kann es auch von Vorteil sein, eine Mantelschicht vorzusehen, die mehrere übereinander angeordnete, den Kern jeweils umgebende Einzel- bzw. Teilschichten aufweist, von denen jede zu mindestens 50 Gew.% aus Kupfer, Zink und/oder einer Kupfer-Zink-Legierung ausgebildet ist. Jede der Teilschichten kann in diesem Rahmen eine der oben allgemein für die Mantelschicht angegebenen Zusammensetzungen aufweisen. Insbesondere können die Teilschichten eine oder mehrere Kupferschichten, eine oder mehrere Zinkschichten und/oder eine oder mehrere Kupfer-Zink-Legierungs-Schichten umfassen. So könnte in einer vorteilhaften Ausgestaltung die Mantelschicht eine äußere Schicht, die überwiegend oder vollständig bzw. im wesentlichen vollständig aus Messing besteht, und eine dünne Kupferschicht zwischen dieser äußeren Schicht und dem Kern aufweisen. Eine derartige Ausgestaltung könnte beispielsweise in der oben bereits beschriebenen Weise realisiert werden, dass der Kern zunächst mit einer Kupferbeschichtung versehen, dann eine Zinkschicht auf diese Kupferbeschichtung aufgebracht wird und schließlich eine Wärmebehandlung durchgeführt wird, in deren Verlauf sich durch Diffusion eine äußere Messingschicht bildet und eine dünne Kupferschicht als Rest der ursprünglichen Kupferbeschichtung übrig bleibt. Eine derartige Kupferschicht hat den Vorteil, dass störende Einflüsse, wie zum Beispiel erhöhte Sprödigkeit oder verringerte Haftung, auf die Übergangsschicht zwischen Kern und Mantelschicht durch Eindringen von Elementen der Mantelschicht verringert oder vermieden werden.

In weiteren vorteilhaften mehrschichtigen Ausgestaltungen der Mantelschicht können eine oder mehrere Teilschichten, die eine $\gamma$-Phase aufweisen oder aus einer solchen ausgebildet sind, mit einer oder mehreren Teilschichten, die eine $\alpha$-Phase aufweisen oder aus einer solchen ausgebildet sind, und/oder einer oder mehreren Teilschichten kombiniert werden, die eine $\beta$-Phase aufweisen oder aus einer solchen ausgebildet. So kann eine Ausgestaltung gewählt werden, bei der die Mantelschicht eine äußere Schicht aus einer überwiegend oder vollständig bzw. im wesentlichen vollständig aus einer $\gamma$-Phase bestehenden Zink- oder Kupfer-Zink-Legierung und eine zwischen dieser äußeren Schicht und dem Kern angeordnete, überwiegend oder vollständig bzw. im wesentlichen vollständig aus $\alpha$-Phase bestehende Schicht aus Kupfer oder einer Kupfer-Zink-Legierung aufweist oder aus diesen besteht, wie es z.B. in der EP 0 733 431 offenbart ist. Ferner kann eine Ausgestaltung gewählt werden, bei der die Mantelschicht eine innere Teilschicht, die überwiegend oder vollständig bzw. im wesentlichen vollständig aus $\beta$-Messing besteht, und eine äußere Teilschicht aufweist oder aus diesen besteht, die überwiegend oder vollständig bzw. im wesentlichen vollständig aus $\gamma$-Messing besteht, wie es z.B. in der EP 1 295 664 offenbart ist. Außerdem kann die obige Ausgestaltung der Mantelschicht mit einem Messing mit einem Zinkanteil von mehr als 40 Gew.% so realisiert werden, dass dieses Messing eine äußere Teilschicht der Mantelschicht bildet und zwischen dieser äußeren Teilschicht und dem Kern eine Teilschicht aus Messing mit einem Zinkanteil von weniger als 40 Gew.% angeordnet ist.

Als Aluminiumlegierungen für den Kern können sowohl nicht aushärtbare Legierungen, wie zum Beispiel AlMg-Legierungen (z.B. AlMg$_3$ oder AlMg$_5$), als auch aushärtbare Legierungen, wie zum Beispiel AlMgSi-Legierungen, AlCuMg-Legierungen oder AlZnMg-Legierungen (z.B. AlCuMg$_1$, AlCuMg$_2$ oder AlZn$_{4,5}$Mg$_1$), zum Einsatz kommen. Letztere bieten den Vorteil, dass eine Verbesserung der Kombination aus Leitfähigkeit und Zugfestigkeit erreicht wird. Bevorzugt sollten Aluminiumlegierungen gewählt werden, die sich gut kalt umformen lassen (Knetlegierungen). Der Kern kann eine oder mehrere dieser Legierungen aufweisen oder aus einer oder mehreren dieser Legierungen ausgebildet sein (d.h. eine (r) oder mehrere(n) aushärtbare(n) Legierungen und/ oder eine(r) oder mehrere(n) nicht aushärtbare(n) Legierungen). Im Hinblick auf ein Recycling im Sinne eines Wiedereinschmelzens können AlZnMgCu-Legierungen in Kombination mit einer nur Kupfer, Zink und/oder Messing aufweisenden Mantelschicht vorteilhaft sein, da die Mantelschicht dann keine über den Kern hinausgehenden Elemente enthält.

Die Materialien der Drahtelektrode sind bevorzugt so gewählt, dass die Zugfestigkeit der Drahtelektrode bei Raumtemperatur mindestens 350 N/mm$^2$ beträgt. Im Fall eines Kerns, der eine Aluminiumlegierung aufweist, lässt sich dies bereits durch geeignete Wahl der Legierung erreichen. Bei der Wahl von reinem Aluminium als Kernmaterial muss dagegen berücksichtigt werden, dass seine Zugfestigkeit auch im kaltverfestigten Zustand geringer als die Zugfestigkeit von Messing ist und die Mantelschicht einen ausreichenden Beitrag zur Gesamtzugfestigkeit des Elektrodendrahtes leisten muss. Mit anderen Worten muss die Mantelschicht dann so aufgebaut sein, dass sie insgesamt in der Weise eine höhere Zugfestigkeit als der Kern erreicht, dass die Gesamtzugfestigkeit des Drahtes mindestens 350 N/mm$^2$ beträgt.

In einer bevorzugten Ausgestaltung ist zwischen dem Kern und der Mantelschicht eine Übergangsschicht angeordnet, die eines oder mehrere Elemente des Kernmaterials sowie eines oder mehrere Elemente der Mantelschicht aufweist und bevorzugt aus diesen besteht oder im wesentlichen besteht. Im allgemeinen wird bereits im Zuge der Herstellung der Drahtelektrode und insbesondere der Mantelschicht eine entsprechende Übergangsschicht entstehen. Zusätzlich oder anstatt einer derartigen herstellungsbedingten Übergangsschicht können auch gezielt eine oder mehrere Übergangsschichten hergestellt werden. Die Übergangsschicht bzw. die Übergangsschichten dient bzw. dienen der Sicherstellung eines ausreichend festen Verbundes zwischen Kern und Mantelschicht.

In einer bevorzugten Ausgestaltung weist die Drahtelektrode einen Durchmesser von mindestens 0,2 mm auf. Die bevorzugte Obergrenze liegt bei 0,4 mm. Im Falle der Wahl eines nicht kreisförmigen Querschnitts für die Drahtelektrode bezieht sich der angegebene Wert für den Durchmesser auf den Mindestdurchmesser. In diesem Durchmesserbereich lassen sich durch den erfindungsgemäßen Aufbau der Elektrodendrähte besonders signifikante Verbesserungen der Wirtschaftlichkeit bei gleichzeitig effizientem Erodierprozess erzielen.

Es ist bevorzugt, den Aufbau der Drahtelektrode so zu wählen, dass ihre Dichte weniger als 5000 kg/m$^3$, mehr bevorzugt weniger als 4800 kg/m$^3$ und am meisten bevorzugt weniger als 4300 kg/m$^3$ beträgt.

Die Erfindung wird im folgenden anhand von Ausführungsbeispielen unter Bezugnahme auf die Zeichnung näher erläutert.

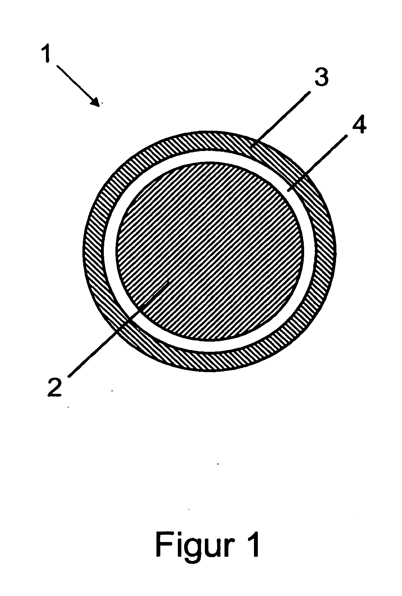

Figur 1 zeigt schematisch und nicht maßstabsgetreu einen Querschnitt einer Ausführungsform der erfindungsgemäßen Drahtelektrode.

Die in Figur 1 im Querschnitt gezeigte Drahtelektrode 1 weist einen Kerndraht 2 auf, der vollständig von einer die Außenseite der Drahtelektrode 1 bildenden Mantelschicht 3 umgeben ist. Zwischen der Mantelschicht 3 und dem Kern 2 ist eine den Kern 2 ebenfalls vollständig umgebende Übergangsschicht 4 angeordnet. Wie oben bereits angegeben wurde, können die Mantelschicht 3 und/oder die Übergangsschicht 4 auch so ausgestaltet sein, dass sie Risse oder Unterbrechungen aufweisen und den Kern nicht vollständig bedecken.

In der dargestellten beispielhaften Ausführungsform ist der Kern 2 homogen vollständig oder im wesentlichen vollständig aus kristallinem Aluminium oder einer kristallinen Aluminiumlegierung ausgebildet. Die Mantelschicht 3 ist ebenfalls homogen und einschichtig aufgebaut und zu mehr als 50 Gew.% und bevorzugt vollständig oder im wesentlichen vollständig aus Messing ausgebildet. Die Übergangsschicht 4 ist aus zeichnerischen Gründen mit einer stark übertriebenen Dicke dargestellt. Tatsächlich trägt sie lediglich in zu vernachlässigendem Maße zu der gesamten Querschnittsfläche bei. Sie weist mindestens ein Element auf, das in dem Kern 2 vorkommt, und mindestens ein Element, das in der Mantelschicht 3 vorkommt. Bevorzugt weist sie eine Legierung auf, die in ihrer Zusammensetzung zwischen derjenigen des Kerns 2 und derjenigen der Mantelschicht 3 liegt. Dabei kann die Zusammensetzung auch in radialer Richtung variieren, um einen allmählichen Übergang zwischen Kern 2 und Mantelschicht 3 zu bewirken. Die Übergangsschicht 4 dient einer verbesserten Verbindung zwischen dem Kern 2 unter Mantelschicht 3. In Abhängigkeit von dem verwendeten Herstellungsverfahren der Drahtelektrode 1 wird, beispielsweise durch Diffusionsprozesse, im allgemeinen bereits inhärent eine mehr oder weniger ausgedehnte Übergangsschicht entstehen. Es ist darauf hinzuweisen, dass insgesamt die Grenzflächen zwischen benachbarten Schichten in der Regel nicht ideal ausgebildet sein werden, sondern unregelmäßig und/oder durch Diffusionsprozesse "unscharf" sein können.

In ähnlicher Weise wie bei der Übergangsschicht 4 kann es auch vorteilhaft sein, die Drahtelektrode 1 so auszubilden, dass die Zusammensetzung des Kerns 2 und/oder der Mantelschicht 3 in radialer Richtung variiert. Dies kann nicht nur durch mehrschichtige Ausgestaltungen realisiert werden, sondern auch durch kontinuierliche Variationen.

Der Flächenanteil des Kerns 2 an der gesamten Querschnittsfläche beträgt mindestens 60%.

In einem speziellen bevorzugten Beispiel dieser Ausführungsform ist der Kern 2 aus Reinaluminium und die Mantelschicht 3 aus CuZn$_{37}$ ausgebildet. Die Übergangsschicht 4 weist eine Dicke von ca. einem Mikrometer auf und besteht im wesentlichen aus Legierungen aus Aluminium und Kupfer und/oder Zink. Die Dicke der Drahtelektrode 1 beträgt 0,25 mm, der Flächenanteil des Kerns 2 an der Querschnittsfläche beträgt 65%, und die Zugfestigkeit der Drahtelektrode 1 beträgt 400 N/mm$^2$.

In einem weiteren speziellen bevorzugten Beispiel der in Figur 1 dargestellten Ausführungsform ist der Kern 2 aus der Legierung AlMg$_3$ und die Mantelschicht 3 aus CuZn$_{45}$ ausgebildet. Die Übergangsschicht 4 weist eine Dicke von ca. 15 $\mu$m auf und besteht im wesentlichen aus Legierungen aus Aluminium und Kupfer und/oder Zink. Die Dicke der Drahtelektrode 1 beträgt 0,3 mm, der Flächenanteil des Kerns 2 an der Querschnittsfläche beträgt 65%, und die Zugfestigkeit der Drahtelektrode 1 beträgt 400 N/mm$^2$.

**Patentansprüche**

**1.** Drahtelektrode zum funkenerosiven Schneiden mit

- einem Kern (2), der zu mehr als 50 Gew.% aus kristallinem Reinaluminium und/oder einer oder mehreren kristallinen Aluminiumlegierungen besteht und
- einer den Kern (2) umgebenden Mantelschicht (3), die Kupfer, Zink und/oder eine Kupfer-Zink-Legierung aufweist,

**dadurch gekennzeichnet, dass** entlang der gesamten Länge der Drahtelektrode (1) der Flächenanteil des Kerns (2) an der gesamten Querschnittsfläche der Drahtelektrode (1) in dem Bereich von 60% bis 95% liegt.

**2.** Drahtelektrode nach Anspruch 1, bei der die Mantelschicht (3) zu mindestens 50 Gew.% aus Kupfer, Zink und/oder einer Kupfer-Zink-Legierung ausgebildet ist.

**3.** Drahtelektrode nach Anspruch 1 oder 2, bei der die Mantelschicht (3) mehrere übereinander angeordnete Teilschichten aufweist, von denen jede zu mindestens 50 Gew.% aus Kupfer, Zink und/oder einer Kupfer-Zink-Legierung ausgebildet ist.

**4.** Drahtelektrode nach einem der vorhergehenden Ansprüche, bei der die Mantelschicht (3) Messing mit einem Zinkanteil von mindestens 40 Gew.% aufweist.

**5.** Drahtelektrode nach einem der vorhergehenden Ansprüche, bei der der Kern (2) aus kristallinem Reinaluminium und/oder einer oder mehreren kristallinen Aluminiumlegierungen ausgebildet ist.

**6.** Drahtelektrode nach einem der vorhergehenden Ansprüche, bei der der Kern (2) aus einer nicht aushärtbaren Aluminiumlegierung ausgebildet ist.

**7.** Drahtelektrode nach einem der Ansprüche 1 bis 5, bei der der Kern (2) aus einer aushärtbaren Aluminiumlegierung ausgebildet ist.

**8.** Drahtelektrode nach Anspruch 7, bei der die aushärtbare Aluminiumlegierung eine AlMgSi-Legierung, eine AlCuMg-Legierung, eine AlZnMg-Legierung oder eine AlZnMgCu-Legierung ist.

**9.** Drahtelektrode nach einem der vorhergehenden Ansprüche, bei der die Zugfestigkeit der Drahtelektrode (1) bei Raumtemperatur mindestens 350 N/mm$^2$ beträgt.

**10.** Drahtelektrode nach einem der vorhergehenden Ansprüche, bei der zwischen dem Kern (2) und der Mantelschicht (3) eine oder mehrere Übergangsschichten (4) angeordnet sind, die eines oder mehrere der Elemente des Kerns (2) und eines oder mehrere der Elemente der Mantelschicht (3) aufweist.

**11.** Drahtelektrode nach einem der vorhergehenden Ansprüche, bei der der Durchmesser der Drahtelektrode (1) mindestens 0,2 mm beträgt.

**12.** Drahtelektrode nach einem der vorhergehenden Ansprüche, bei der die Dichte der Drahtelektrode (1) weniger als 5000 kg/m$^3$ beträgt.

**Claims**

**1.** A wire electrode for cutting by electrical discharge machining, having

- a core (2) that is composed of more than 50% by weight of pure crystalline aluminum and/or one or more crystalline aluminum alloys, and
- a covering layer (3) that encompasses the core (2) and comprises copper, zinc and/or a copper-zinc alloy,

**characterized in that**, along the entire length of the wire electrode (1), the proportion of the area of the core (2) relative to the entire cross-sectional area of the wire electrode (1) is in the range from 60% to 95%.

**2.** The wire electrode as claimed in claim 1, wherein the covering layer (3) is made of at least 50% by weight of copper, zinc and/or a copper-zinc alloy.

**3.** The wire electrode as claimed in claim 1 or 2, wherein the covering layer (3) has a plurality of sublayers, which are disposed on top of one another and of which each is made of at least 50% by weight of copper, zinc and/or a copper-zinc alloy.

**4.** The wire electrode as claimed in any one of the preceding claims, wherein the covering layer (3) comprises brass having a zinc content of at least 40% by weight.

**5.** The wire electrode as claimed in any one of the preceding claims, wherein the core (2) is made of pure crystalline aluminum and/or of one or more crystalline aluminum alloys.

**6.** The wire electrode as claimed in any one of the preceding claims, wherein the core (2) is made of a non-hardenable aluminum alloy.

**7.** The wire electrode as claimed in any one of claims 1 to 5, wherein the core (2) is made of a hardenable aluminum alloy.

**8.** The wire electrode as claimed in claim 7, wherein the hardenable aluminum alloy is an AlMgSi alloy, an AlCuMg alloy, an AlZnMg alloy or an AlZnMgCu alloy.

**9.** The wire electrode as claimed in any one of the preceding claims, wherein the tensile strength of the wire electrode (1) at room temperature is at least 350 N/mm$^2$.

**10.** The wire electrode as claimed in any one of the preceding claims, wherein one or more transition layers (4), which comprise one or more of the elements of the core (2) and one or more of the elements of the covering layer (3), are disposed between the core (2) and the covering layer (3).

**11.** The wire electrode as claimed in any one of the preceding claims, wherein the diameter of the wire electrode (1) is at least 0.2 mm.

**12.** The wire electrode as claimed in any one of the preceding claims, wherein the density of the wire electrode (1) is less than 5000 kg/m$^3$.

**Revendications**

**1.** Fil-électrode pour le découpage par étincelage, comprenant :

- un noyau (2) qui est constitué à plus de 50 % en poids d'aluminium pur cristallin et/ou d'un ou plusieurs alliages d'aluminium cristallins, et
- une couche enveloppe (3) entourant le noyau (2), laquelle couche comporte du cuivre, du zinc et/ou un alliage cuivre-zinc,

**caractérisé en ce que**, sur toute la longueur du fil-électrode (1), la proportion de la surface du noyau (2) par rapport à la surface totale en section transversale du fil-électrode (1) se situe dans la plage de 60 % à 95 %.

2. Fil-électrode selon la revendication 1, dans lequel la couche enveloppe (3) est formée à hauteur d'au moins 50 % en poids de cuivre, de zinc et/ou d'un alliage cuivre-zinc.

3. Fil-électrode selon la revendication 1 ou 2, dans lequel la couche enveloppe (3) présente plusieurs couches partielles superposées, dont chacune est formée à hauteur d'au moins 50 % en poids de cuivre, de zinc et/ou d'un alliage cuivre-zinc.

4. Fil-électrode selon l'une quelconque des revendications précédentes, dans lequel la couche enveloppe (3) comporte du laiton avec une proportion de zinc d'au moins 40 % en poids.

5. Fil-électrode selon l'une quelconque des revendications précédentes, dans lequel le noyau (2) est formé d'aluminium pur cristallin et/ou d'un ou plusieurs alliages d'aluminium cristallins.

6. Fil-électrode selon l'une quelconque des revendications précédentes, dans lequel le noyau (2) est formé d'un alliage d'aluminium non durcissable.

7. Fil-électrode selon l'une quelconque des revendications 1 à 5, dans lequel le noyau (2) est formé d'un alliage d'aluminium durcissable.

8. Fil-électrode selon la revendication 7, dans lequel l'alliage d'aluminium durcissable est un alliage de AlMgSi, un alliage de AlCuMg, un alliage de AlZnMg ou un alliage de AlZnMgCu.

9. Fil-électrode selon l'une quelconque des revendications précédentes, dans lequel la résistance à la traction du fil-électrode (1) est d'au moins 350 N/mm$^2$ à température ambiante.

10. Fil-électrode selon l'une quelconque des revendications précédentes, dans lequel une ou plusieurs couches de transition (4) est ou sont agencées entre le noyau (2) et la couche enveloppe (3), laquelle ou lesquelles couches de transition présentent un ou plusieurs des éléments du noyau (2) et un ou plusieurs des éléments de la couche enveloppe (3).

11. Fil-électrode selon l'une quelconque des revendications précédentes, dans lequel le diamètre du fil-électrode (1) est d'au moins 0,2 mm.

12. Fil-électrode selon l'une quelconque des revendications précédentes, dans lequel la masse volumique du fil-électrode (1) est inférieure à 5000 kg/m$^3$.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0734805 A
- US 4968867 A
- EP 0733431 A
- EP 1295664 A